# EUROPÄISCHE PATENTSCHRIFT

(11) **EP 2 801 981 B1**
(45) Veröffentlichungstag und Bekanntmachung des Hinweises auf die Patenterteilung: **21.10.2015**
(21) Anmeldenummer: 14162342.1
(22) Anmeldetag: 28.03.2014
(51) Int. Cl.: G21C 19/18, G21C 19/10

(54) **Transfervorrichtung für den Transfer von Brennelementen**
Transfer device for the transfer of fuel elements
Dispositif de transfert pour le transfert d'éléments combustibles

(30) Priorität: 08.05.2013 DE 102013104765
(43) Veröffentlichungstag der Anmeldung: 12.11.2014
(73) Patentinhaber: Siempelkamp Nukleartechnik GmbH, 47803 Krefeld (DE)
(72) Erfinder: Jurianz, Christian, 47803 Krefeld (DE); Bauer, Stefan, 64683 Einhausen (DE); Steck, Stefan Oliver, 64372 Ober-Ramstedt (DE)
(74) Vertreter: von dem Borne, Andreas

(56) Entgegenhaltungen:
- DE-A1- 2 338 228
- US-A- 4 786 460

## Beschreibung

Die Erfindung betrifft eine Transfervorrichtung für den Transfer von Brennelementen zwischen einem oberen Becken und einem unteren Becken einer kerntechnischen Anlage, insbesondere einem oberen Becken innerhalb eines Reaktorgebäudes und einem unteren Becken eines Brennelementelagers, mit
- einem das obere und das untere Becken verbindenden und schräg zur Vertikalen verlaufenden Transferrohr,
- einem oder mehreren Transferkörben, in welche jeweils ein oder mehrere Brennelemente für den Transfer durch das Transferrohr einsetzbar sind,
- einer oberen Umladeeinrichtung im oberen Becken zum Beladen und/ oder Entladen der Transferkörbe mit Brennelementen und/oder
- einer unteren Umladeeinrichtung im unteren Becken zum Beladen und/ oder Entladen der Transferkörbe mit Brennelementen.

Bei dem Reaktor kann es sich z. B. um einen Siedewasserreaktor oder auch einen Druckwasserreaktor handeln.

Dem Austausch und Transfer von Brennelementen kommt innerhalb einer kerntechnischen Anlage in der Praxis besondere Bedeutung zu. Dabei bestehen Brennelemente in der Regel aus einem Bündel einzelner Brennstäbe und das Brennelement selbst ist mit einem Griff oder dergleichen ausgerüstet, so dass es mit Hilfe geeigneter Maschinen transportiert werden kann, um es z. B. in den Reaktorbehälter einzusetzen oder aus dem Reaktorbehälter zu entfernen. So müssen insbesondere abgebrannte Brennelemente aus dem Reaktorbehälter entfernt und z. B. in ein Brennelementelager überführt werden. Umgekehrt müssen frische Brennelemente in den Reaktorbehälter eingebracht werden. In der Praxis ist es üblich, das obere Becken innerhalb des Reaktorgebäudes während des Brennelementeaustauschs zu fluten, so dass die Brennelemente innerhalb der Flüssigkeit (Wasser) transportiert werden. Sie werden aus dem geöffneten Reaktorbehälter mit Hilfe einer oberhalb des Reaktorbehälters verfahrbaren Lademaschine entnommen und innerhalb des oberen Beckens verfahren und gegebenenfalls in einem Pufferbecken/Abklingbecken zwischengelagert. Aus dem oberen Becken müssen die Brennelemente mit Hilfe einer Transfervorrichtung z. B. in ein Brennelementelager transportiert werden, welches ebenfalls mit einem (unteren) Becken ausgerüstet ist, wobei das obere Becken (z. B. innerhalb des Reaktorgebäudes) und das untere Becken (z. B. innerhalb des Brennelementelagers) getrennt voneinander mit unterschiedlichem Flüssigkeitsniveau gefüllt sind. Zwischen diesen beiden Becken erfolgt der Transfer mit Hilfe der Transfervorrichtung durch ein schräg zur Vertikalen angeordnetes Transferrohr. Solche Transfervorrichtungen sind aus der Praxis grundsätzlich bekannt. Dabei ist man bestrebt, den Zeitaufwand für einen Brennelementewechsel möglichst kurz zu halten, um Unterbrechungen des Leistungsbetriebes des Reaktors möglichst zu reduzieren. Der Reduzierung des Zeitraums für den Brennelementewechsel kommt unter wirtschaftlichen Aspekten besondere Bedeutung zu.

Aus der DE 23 38 228 ist eine Transfervorrichtung für Brennelemente einer Kernreaktoranlage bekannt, bei welcher die Brennelemente durch ein schräg zur Vertikalen orientiertes Transferrohr transportiert werden. Das Transferrohr führt durch die Sicherheitshülle hindurch, welche den Reaktordruckbehälter eines Druckwasserreaktors gasdicht umschließt. Das innere Becken und das äußere Becken sind während des Brennelementewechsels auf ein und dasselbe Flüssigkeitsniveau geflutet, so dass während des Transfers der Brennelemente keine Absperrmaßnahmen im Bereich des Transferrohrs erforderlich sind. Der Transport erfolgt mit Hilfe einer Seilzugvorrichtung und mit Hilfe eines Wagens, der zwei Kammern aufweist, von denen die eine ein frisches Brennelement für die Hinfahrt und die andere ein verbrauchtes Brennelement für die Rückfahrt aufnimmt. Der Wagen ist dabei aus einer vertikalen Umladeposition in eine horizontale bzw. schräge Transferposition schwenkbar. Die bekannte Transfervorrichtung dient ausschließlich dem Transfer von Brennelementen zwischen zwei Becken, die mit demselben Flüssigkeitsniveau gefüllt sind.

Gleiches gilt für die aus der DE 27 28 445 bzw. US 4 096 031 bekannte Transfervorrichtung, mit der Brennelemente unmittelbar zwischen dem Reaktorbehälter und einem direkt daneben angeordneten Speicherbehälter transportiert werden, wobei der Reaktorbehälter und der Speicherbehälter über ein schräg zur Vertikalen verlaufendes Transportrohr miteinander verbunden sind. Endseitig dieses Transferrohrs sind Umladeeinrichtungen vorgesehen, mit denen die Brennelemente aus einer schrägen Transferrichtung in eine vertikale Umladerichtung schwenkbar sind. Der Transfer durch das Transferrohr erfolgt mit Hilfe einer Seilzugvorrichtung, welche das Brennelement jeweils mit einem Greifer direkt greift.

Die DE 1 042 778 (bzw. US 3 058 900) beschreibt eine Beschickvorrichtung für Kernreaktoren, wobei Brennelemente unmittelbar zwischen dem Reaktorbehälter und einem unterhalb des Reaktorbehälters horizontal verlaufenden Kanals transportiert werden, wobei der Reaktorbehälter und der Kanal über ein Rohr miteinander verbunden sind, welches schräg zur Vertikalen ausgerichtet ist. Für den Transfer wird ein Brennelement in eine Patrone eingesetzt, welche durch das Rohr transportierbar ist, wobei die Patrone oberseitig mit einem Griff oder dergleichen ausgerüstet ist, so dass sie mit einem Werkzeug greifbar ist.

Das Rohr ist mit einem Absperrorgan vollständig absperrbar. Dieses Absperrorgan wird geöffnet, wenn mit Hilfe der Beschickvorrichtung ein Brennelementewechsel erfolgt.

Aus der DE 27 46 391 (bzw. US 4 096 031) ist eine Lade- und Entladevorrichtung für Brennelemente bekannt, welche oberseitig auf den Reaktorbehälter aufgesetzt ist und welche zwei entgegengesetzt schräg zur Vertikalen angeordnete Rampen aufweist, zwischen denen die Brennelemente mit einer Schwenkvorrichtung schwenkbar sind. Eine ähnlich aufgebaute Vorrichtung ist aus der EP 0 048 671 B1 (bzw. US 4 440 178) bekannt. Eine weitere Transfervorrichtung ist z. B. aus der US 4 786 460 bekannt.

Der Erfindung liegt die Aufgabe zugrunde, eine Transfervorrichtung für einen schnellen und wirtschaftlichen Transfer von Brennelementen zwischen einem oberen Becken und einem unteren Becken einer kerntechnischen Anlage zu schaffen. Besonders bevorzugt soll sich diese Transfervorrichtung für einen Transfer zwischen einem oberen Becken und einem unteren Becken eignen, welche auf unterschiedlichem Flüssigkeitsniveau liegen.

Zur Lösung dieser Aufgabe lehrt die Erfindung eine Transfervorrichtung mit den Merkmalen des Anspruchs 1. Es ist vorgesehen, dass in die obere Umladeeinrichtung und/oder die untere Umladeeinrichtung jeweils zwei Transferkörbe einsetzbar sind, welche zur Positionierung über bzw. unter dem Transferrohr verschiebbar und im Zuge des Verschiebens vorzugsweise selbsttätig aus einer vertikalen Umladeposition in eine schräge Transferposition und umgekehrt schwenkbar sind. Dabei weist die obere Umladeeinrichtung und/oder die untere Umladeeinrichtung (jeweils) zwei Schwenkrahmen auf, in welche jeweils ein Transferkorb einsetzbar ist und in welchen die Transferkörbe aus einer vertikalen Umladeposition in eine schräge Transferposition umgekehrt schwenkbar sind. Dabei können die Schwenkrahmen (mit darin angeordneten Transferkörben) um eine gemeinsame (horizontale) Achse schwenkbar montiert sein. Besonders bevorzugt sind die Schwenkrahmen gemeinsam horizontal verschiebbar und z. B. über die eingesetzten Transferkörbe im Zuge des Verschiebens selbsttätig schwenkbar. Dieses kann z. B. dadurch realisiert werden, dass die Schwenkrahmen oder die darin eingesetzten Transferkörbe im Zuge des Verschiebens derart in/an Steuerschienen geführt sind, dass die Transferkörbe selbsttätig schwenken, vorzugsweise indem unterseitige Steuerzapfen in den Steuerschienen geführt sind. Solche Steuerschienen können z. B. als kurvenförmige Schienen ausgebildet sein.

Die Erfindung geht dabei zunächst einmal von der Erkenntnis aus, dass ein schneller und wirtschaftlicher Transfer von Brennelementen durch ein Transferrohr dann realisiert werden kann, wenn die Brennelemente nicht direkt selbst durch das Transferrohr transportiert werden, sondern innerhalb von Transferkörben, wobei besonders bevorzugt mehrere Brennelemente, z. B. vier Brennelemente, in jeden Transferkorb einsetzbar sind. Das Beladen und Entladen der Transferkörbe mit Brennelementen erfolgt in einer vertikalen Umladeposition und der Transfer selbst erfolgt in einer schrägen Transferposition entsprechend der Neigung des Transferrohrs gegenüber der Vertikalen. Die erfindungsgemäße Umladeeinrichtung ermöglicht ein schnelles Beladen und Entladen der Transferkörbe und zugleich ein einfaches und schnelles Einbringen der Transferkörbe in das Transferrohr. Denn im Bereich der Umladeeinrichtung sind zugleich zwei Transferkörbe einsetzbar, wobei ein Transferkorb oberhalb/ unterhalb und folglich fluchtend mit dem Transferrohr in der geneigten Transferposition angeordnet ist und der andere Transferkorb kann seitlich versetzt neben dem Transferrohr in einer vertikalen Umladeposition angeordnet sein. Dadurch besteht die Möglichkeit, den sich in der vertikalen Umladeposition befindenden Transferkorb zu beladen/entladen, während sich ein weiterer Transferkorb in der schrägen Transferposition oder auch innerhalb des Transferrohres befindet. Durch Verschieben der Transferkörbe innerhalb der Umladeeinrichtung lassen sich die Transferkörbe folglich entweder fluchtend mit dem Transferrohr positionieren oder neben dem Transferrohr für das Umladen positionieren. Besonders bevorzugt erfolgt im Zuge dieses Verschiebens selbsttätig und folglich automatisch ein Verschwenken der Transferkörbe in die jeweilige Position, d. h. entweder in die Umladeposition oder in die Transferposition. Damit kann es ausreichen, die Umladeeinrichtung lediglich mit einem Verschiebeantrieb auszurüsten, mit dem die Transferkörbe linear verschoben werden, wobei dann im Zuge des Verschiebens ohne zusätzlichen Antrieb ein Verschwenken automatisch erfolgt. Unter Berücksichtigung der Tatsache, dass sich die Umladeeinrichtung innerhalb des Beckens und folglich unter Wasser befindet, ist es sehr vorteilhaft, wenn die Anzahl der erforderlichen Antriebe reduziert werden kann. Dennoch gelingt im Rahmen der Erfindung ein einfaches, schnelles und automatisiertes Beladen und Entladen der Transferkörbe und zugleich ein schneller Transfer durch das Transferrohr. Besonders bevorzugt gelingt das automatische Schwenken im Zuge des Verschiebens in Verbindung mit den beschriebenen Schwenkrahmen und/oder Steuerschienen.

Nach einem weiteren Vorschlag der Erfindung können die Schwenkrahmen in einem gemeinsamen Verschieberahmen schwenkbar angeordnet und mit diesem verschiebbar sein, wobei die Schwenkrahmen mit den eingesetzten Transferkörben durch Verschieben des Verschieberahmens relativ zu dem Transferrohr positionierbar und dabei selbsttätig schwenkbar sind. Der Verschieberahmen selbst kann in einem (stationären) Tragrahmen verschiebbar geführt sein, wobei an den Tragrahmen ein oder mehrere der beschriebenen Steuerschienen angeschlossen sein können.

Es liegt im Rahmen der Erfindung, dass lediglich die obere Umladeeinrichtung oder die untere Umladeeinrichtung in der beschriebenen Ausführungsform für zwei Transferkörbe ausgelegt ist. Die dann noch verbleibende andere Umladeeinrichtung kann für lediglich einen einzigen Transferkorb ausgelegt sein. In diesem Fall wird die Anlage bevorzugt mit zwei Transferkörben betrieben.

Besonders bevorzugt sind jedoch sowohl die obere Umladeeinrichtung als auch die untere Umladeeinrichtung in der erfindungsgemäßen Weise ausgestaltet, so dass sich dann sowohl in der oberen Umladeeinrichtung als auch in der unteren Umladeeinrichtung zwei Transferkörbe befinden können. In diesem Fall wird besonders bevorzugt mit (genau) drei Transferkörben gearbeitet, wobei sich ein erster Transferkorb in der oberen Umladeeinrichtung, ein zweiter Transferkorb in der unteren Umladeeinrichtung und ein dritter Transferkorb entweder innerhalb des Transferrohres oder in einer der Umladeeinrichtungen befindet. Damit gelingt ein besonders schneller Transfer der Brennelemente und folglich ein beschleunigter Brennelementewechsel, so dass Stillstandzeiten des Reaktors für den Brennelementewechsel deutlich reduziert werden können. Dieses gelingt bei einfacher und zuverlässiger Konstruktion und Handhabung der beschriebenen Vorrichtungen.

Bevorzugt ist die Transfervorrichtung mit einer Seilzugeinrichtung ausgerüstet, welche ein innerhalb des Transferrohres geführtes Zugseil zum Anheben und Absenken der Transferkörbe innerhalb des Transferrohres aufweist. Eine solche Seilzugeinrichtung zeichnet sich durch einfache und zuverlässige Handhabung aus. Sie lässt sich hervorragend mit den erfindungsgemäßen Umladeeinrichtungen kombinieren. Dieses gilt insbesondere dann, wenn innerhalb des Transferrohres ein Hubwagen geführt ist, an welchen das Zugseil angeschlossen ist und auf welchen ein Transferkorb für den Transfer aufsetzbar ist. Der Hubwagen ist folglich während des Transfers unterhalb des Transferkorbes angeordnet, so dass die Seilzugeinrichtung erfindungsgemäß nicht unmittelbar oberseitig an die Transferkörbe angreift, sondern (mittelbar) über den Hubwagen. Eine solche Ausgestaltung ist unter anderem dann zweckmäßig, wenn das Transferrohr an seinem oberen Ende mit einer Absperreinrichtung absperrbar ist und wenn unterhalb dieses oberen Absperrelementes ein Seileinlass seitlich in das Transferrohr integriert ist, durch den das Zugseil aus dem Rohrinnern zu der Seilwinde hindurchgeführt ist. Das Seil der Seilzugeinrichtung wird bei dieser Ausführungsform folglich von der Seilwinde nicht stirnseitig in das Transferrohr eingeführt, sondern über einen (oberen) seitlichen Seileinlass, so dass die Seilzuführung in das Transferrohr unterhalb eines oberen (vollschließenden) Absperrelementes, z. B. Schiebers, erfolgt. Dieses hat den Vorteil, dass das obere Absperrelement grundsätzlich nach dem Einführen der Brennelemente in das Transferrohr wieder geschlossen werden kann, da der Transfer mit Hilfe der Seilzugeinrichtung auch bei geschlossenem, oberen Absperrelement möglich ist. Das obere Absperrelement muss folglich nur für einen kurzen Zeitraum geöffnet werden, wenn die Brennelemente durch den Bereich des oberen Absperrelementes abgesenkt oder angehoben werden. In Verbindung mit dem beschriebenen Hubwagen besteht die Möglichkeit, dass der Hubwagen nicht vollständig oberseitig aus dem Transferrohr ausfahren muss, sondern lediglich bis in den Bereich des oberen Endes des Transferrohres, da dort der seitliche Seileinlass vorgesehen ist, der an den Hubwagen angreift. Bevorzugt ist nicht nur ein oberes Absperrelement, sondern auch ein unteres Absperrelement am unteren Rohrende vorgesehen, wobei diese Absperrelemente als vollschließende Absperrelemente, z. B. als Schieber das Rohr flüssigkeitsdicht abdichten können. Ferner kann es zweckmäßig sein, in das Transferrohr ein oder mehrere (teilschließende) Absperrelemente zu integrieren, welche jeweils einen Seildurchlass aufweisen, durch welchen das Zugseil in Schließstellung hindurchführbar ist. So können zwischen oberem (vollschließendem) Absperrelement und unterem (vollschließendem) Absperrelement ein oder mehrere, z. B. zwei teilschließende Zwischen-Absperrelemente vorgesehen sein, die z. B. als Kugelventile mit einem Seildurchlass, z. B. einer Durchbrechung, in der Ventilkugel ausgerüstet sein können. Teilschließendes Absperrelement meint, dass das Absperrelement zwar einerseits in eine vollständig geöffnete und andererseits in eine geschlossene Position gebracht werden kann, dass das Absperrelement jedoch in der geschlossenen Position (Schließstellung) nach wie vor einen Seildurchlass und folglich eine entsprechend dimensionierte Öffnung (z. B. eine Nut) aufweist, so dass das Zugseil der Seilzugvorrichtung für einen einwandfreien Transfer durch das Absperrelement hindurchgeführt werden kann. Die dabei aufgrund des Seildurchlasses eventuell auftretenden geringen Leckagen können in Kauf genommen werden und durch entsprechendes Pumpen wieder ausgeglichen werden. Entscheidend ist die Tatsache, dass solche Leckagen mit Hilfe der teilschließenden Absperrelemente auf ein Minimum reduziert werden können.

Dabei können z. B. pneumatische Antriebe für die Absperrelemente verwendet werden. Alternativ können aber auch elektrische oder hydraulische Antriebe eingesetzt werden.

Im Übrigen ist es zweckmäßig, dass die Transferkörbe und/oder der Hubwagen mittels Führungselementen, z. B. Führungsrollen, an Führungsschienen geführt ist/sind, welche an der Innenwand des Transferrohres angeordnet sind. Außerdem kann es zweckmäßig sein, auch im Bereich der Schwenkrahmen Führungsschienen für zumindest die Transferkörbe sowie ggf. auch den Hubwagen vorzusehen.

Im Folgenden wird die Erfindung anhand einer lediglich ein Ausführungsbeispiel darstellenden Zeichnung näher erläutert. Es zeigen
- Fig. 1: eine kerntechnische Anlage mit Reaktorgebäude und Brennelementelager in einem perspektivischen Vertikalschnitt,
- Fig. 2: einen vergrößerten Ausschnitt aus dem Gegenstand nach Fig. 1 im Bereich der oberen Umladeeinrichtung,
- Fig. 3: einen vergrößerten Ausschnitt aus dem Gegenstand nach Fig. 1 im Bereich der unteren Umladeeinrichtung,
- Fig. 4: die obere Umladeeinrichtung aus einer anderen Ansicht,
- Fig. 5: einen vergrößerten Ausschnitt aus dem Gegenstand nach Fig. 4,
- Fig. 6a, 6b: die obere Umladeeinrichtung in zwei unterschiedlichen Funktionsstellungen,
- Fig. 7a, 7b: weitere vergrößerte Ausschnitte aus dem Gegenstand nach Fig. 1 in anderer Ansicht,
- Fig. 8a, 8b: einen vergrößerten Ausschnitt aus dem Gegenstand nach Fig. 7a in unterschiedlichen Funktionsstellungen,
- Fig. 9: eine andere Ansicht auf das Transferrohr (teilaufgebrochen) während des Transfers,
- Fig. 10a,10b: die untere Umladeeinrichtung in unterschiedlichen Funktionsstellungen.

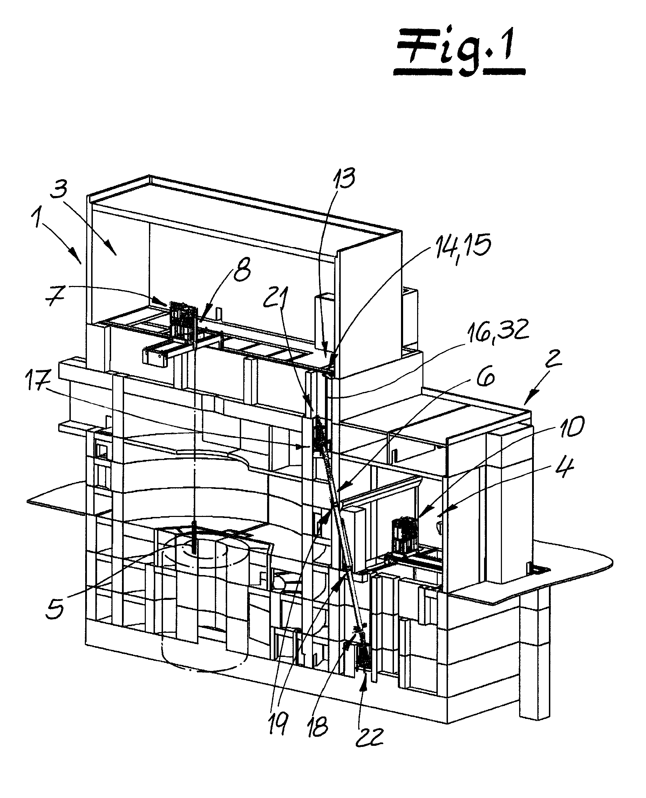

In Fig. 1 ist vereinfacht eine Kernreaktor-Anlage mit einem Reaktorgebäude 1 dargestellt, in welchem ein nicht gezeigter Kernreaktor angeordnet ist, z. B. ein Siedewasserreaktor. Neben dem Reaktorgebäude 1 ist ein Brennelementelager 2 vorgesehen. Innerhalb des Reaktorgebäudes ist ein oberes Becken 3 vorgesehen, welches mit einer Flüssigkeit auf ein oberes Niveau geflutet wird. Im Bereich des Brennelementelagers 2 ist ein unteres Becken 4 vorgesehen, welches auf ein unteres Flüssigkeitsniveau geflutet wird. Während eines Brennelementewechsels werden z. B. (abgebrannte) Brennelemente 5 aus dem Reaktor über das obere Becken 3 mit Hilfe einer Transfervorrichtung 6 in den Bereich des unteren Beckens 4 transportiert und/oder umgekehrt neue Brennelemente nach oben transportiert. Zum Entnehmen der Brennelemente 5 aus dem Reaktorbehälter ist im Reaktorgebäude 1 eine Lademaschine 7 vorgesehen, mit welcher z. B. ein Brennelement 5 aus dem Reaktorbehälter entfernt und im Bereich des oberen Beckens 3 zu der Transfervorrichtung 6 transportiert werden kann. Dazu kann die Lademaschine 7 z. B. mit einem Teleskopgreifer 8 ausgerüstet sein, mit dem das Brennelement 5, welches mit einem Griff 9 ausgerüstet ist, greifbar ist. In ähnlicher Weise ist im Brennelementelager 2 eine Lademaschine 10 vorgesehen, mit welcher die Brennelemente 5 aus dem Bereich der Transfervorrichtung 6 abtransportiert oder in den Bereich der Transfervorrichtung 6 transportiert werden können. Die vorliegende Erfindung befasst sich mit der Transfervorrichtung 6, mit der sich die Brennelemente 5 aus dem oberen Becken 3 des Reaktorgebäudes 1 in das untere Becken 4 des Brennelementelagers 2 (und umgekehrt) transportieren lassen, wobei der Flüssigkeitsspiegel des oberen Beckens oberhalb des Flüssigkeitsspiegels des unteren Beckens liegt. Die Transfervorrichtung 6 weist ein Transferrohr 11 auf, welches das obere und das untere Becken miteinander verbindet und schräg zur Vertikalen verläuft. Außerdem weist die Transfervorrichtung mehrere Transferkörbe 12 auf, d. h., die Brennelemente werden nicht direkt selbst durch das Transferrohr 11 transportiert, sondern in Transferkörben 12, wobei im Ausführungsbeispiel in einen Transferkorb vier Brennelemente einsetzbar sind. Ferner weist die Transfervorrichtung 6 eine Seilzugeinrichtung 13 auf, welche eine Seilwinde 14 mit Antrieb 15 und ein Zugseil 16 aufweist, welches innerhalb des Transferrohres 11 zum Anheben und Absenken der Transferkörbe 12 geführt ist. Das Transferrohr 11 ist mit mehreren Absperrelementen 17, 18, 19 ausgerüstet, mit denen der Rohrquerschnitt absperrbar ist, um ein Ablaufen der Flüssigkeit aus dem oberen Becken 3 in das untere Becken 4 zu verhindern bzw. zu minimieren. Das Transferrohr 11 ist an seinem oberen Ende mit einem oberen, vollschließenden Absperrelement 17 und an seinem unteren Ende mit einem unteren, vollschließenden Absperrelement 18 versehen, wobei diese Absperrelemente 17, 18 als Schieber ausgebildet sind. An dieser Stelle ist ausreichend Bauraum für die Verwendung von Schiebern vorhanden. Zwischen oberem Absperrelement 17 und unterem Absperrelement 18 sind mehrere weitere Absperrelemente, nämlich mehrere teilschließende Zwischenelemente 19 angeordnet, welche im Ausführungsbeispiel als Kugelventile ausgebildet sind. An diesen Stellen werden Kugelventile verwendet, da das Transferrohr 12 hier innerhalb einer Betonröhre verläuft und deshalb verhältnismäßig wenig Platz zur Verfügung steht.

Der Unterschied zwischen den vollschließenden Absperrelementen 17, 18 und den teilschließenden Absperrelementen 19 besteht darin, dass die teilschließenden Absperrelemente mit einem Seildurchlass 30 versehen sind, durch welchen das Zugseil 16 in Schließstellung des Absperrelementes 19 hindurchführbar ist. Demgegenüber sind die vollschließenden Absperrelemente 17, 18 ohne einen solchen Seildurchlass ausgebildet. Sämtliche Absperrelemente 17, 18, 19 müssen (vollständig) geöffnet werden, um einen Transferkorb 12 durch den jeweiligen Ventilbereich hindurchzufahren. Die teilschließenden Absperrelemente 19 können jedoch nach Durchfahren des Transferkorbes 12 geschlossen werden, da das Zugseil 16 der Seilzugvorrichtung auch bei geschlossener Ventilstellung durch den Seildurchlass 30 hindurchgeführt werden kann. Die Transfervorrichtung 6 weist außerdem einen Hubwagen 20 auf, d. h. das Zugseil 16 der Seilzugvorrichtung 13 greift nicht an die Transferkörbe 12 an, sondern ist an einen (separaten) Hubwagen 20 angeschlossen, wobei dieser Hubwagen 20 unterhalb des Transferkorbes 12 angeordnet ist, d. h., der Transferkorb 12 wird während des Transfers auf den Hubwagen 20 aufgesetzt. Auf die Vorteile dieser Ausgestaltung wird im Folgenden noch eingegangen.

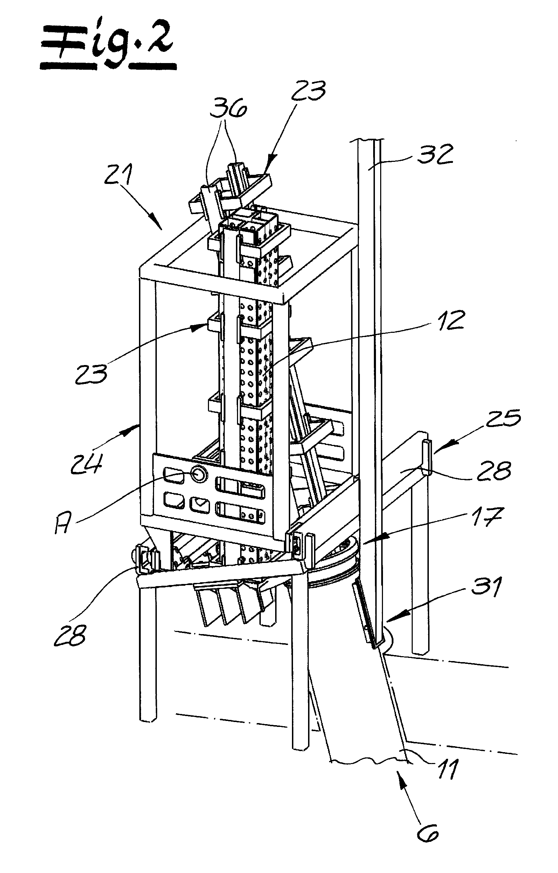

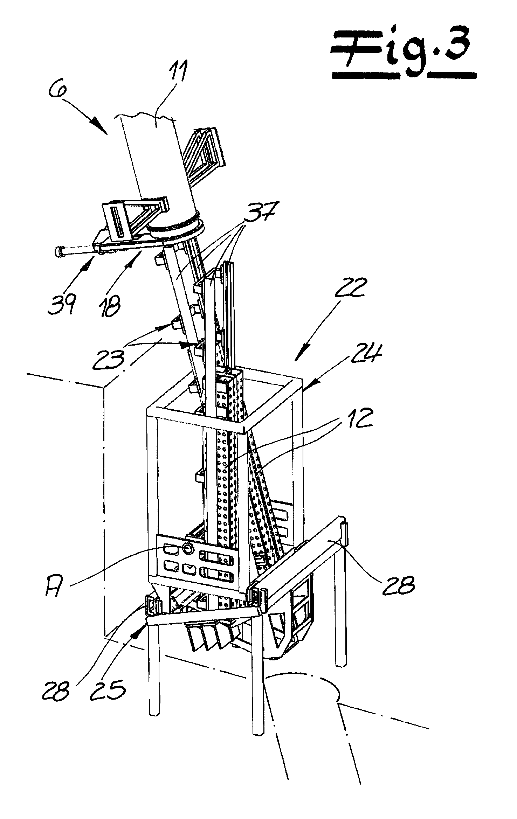

Darüber hinaus weist die Transfervorrichtung 6 gemäß Fig. 2 eine obere Umladeeinrichtung 21 im oberen Becken 3 zum Beladen und/oder Entladen der Transferkörbe 12 mit Brennelementen 5 auf. Im unteren Becken 4 weist die Transfervorrichtung 6 eine untere Umladeeinrichtung 22 (Fig. 3) zum Beladen und/oder Entladen der Transferkörbe 12 mit Brennelementen 5 auf.

Für den Transfer der Brennelemente 5 aus dem oberen Becken 3 in das untere Becken 4 wird folglich zunächst ein Transferkorb 12 mit Brennelementen 5 in der oberen Umladeeinrichtung 21 beladen. Anschließend wird der Transferkorb 12 von der oberen Umladeeinrichtung 21 durch das Transferrohr 11 in den Bereich der unteren Umladeeinrichtung 22 transportiert, und zwar mit Hilfe der Seilzugvorrichtung 13. In der unteren Umladeeinrichtung 22 können die Brennelemente 5 dann (z. B. mit Hilfe der Lademaschine 10) aus dem Transferkorb 12 entnommen werden. Anschließend kann der Transferkorb 12 (z. B. leer ohne Brennelemente) wieder mit Hilfe der Seilzugvorrichtung 13 durch das Transferrohr 11 nach oben transportiert werden.

Um einen schnellen und damit wirtschaftlichen Transfer zu gewährleisten sind sowohl in die obere Umladeeinrichtung 21 als auch in die untere Umladeeinrichtung 22 jeweils zwei Transferkörbe 12 einsetzbar, welche zur Positionierung über bzw. unter dem Transferrohr 11 horizontal verschiebbar und im Zuge des Verschiebens bevorzugt selbsttätig aus einer vertikalen Umladeposition in eine schräge Transferposition und umgekehrt schwenkbar sind. Die Transferkörbe 12 werden folglich in einer vertikalen Umladeposition mit den Brennelementen 5 beladen und dementsprechend werden die Brennelemente 5 auch in einer solchen vertikalen Umladeposition aus den Transferkörben 12 entnommen. Für den Transport innerhalb des Transferrohrs 11 werden die Transferkörbe 12 dann in die schräge Transferposition geschwenkt. Bei der dargestellten Ausführungsform erfolgt dieses Schwenken der Transferkörbe 12 selbsttätige im Zuge des Verschiebens der Transferkörbe 12. Dieses soll beispielhaft zunächst anhand der oberen Umladeeinrichtung 21 erläutert werden. Die obere Umladeeinrichtung 21 ist mit zwei Schwenkrahmen 23 ausgerüstet, in welche jeweils ein Transferkorb einsetzbar ist und in welchen die Transferkörbe 12 aus einer vertikalen Umladeposition in eine schräge Transferposition und umgekehrt schwenkbar sind. Dabei sind die beiden Schwenkrahmen 23 mit den darin angeordneten Transferkörben 12 um eine gemeinsame (horizontale) Achse A gegenläufig schwenkbar montiert. Die beiden Schwenkrahmen 23 sind gemeinsam horizontal verschiebbar und über die eingesetzten Transferkörbe 12 im Zuge des Verschiebens selbsttätig schwenkbar, und zwar gegenläufig. Dazu sind die beiden Schwenkrahmen 23 in einem gemeinsamen Verschieberahmen 24 schwenkbar angeordnet und mit diesem verschiebbar, wobei die Schwenkrahmen mit den eingesetzten Transferkörben 12 durch Verschieben des Verschieberahmens 24 innerhalb des Tragrahmens 25 relativ zu dem Transferrohr positionierbar und dabei selbsttätig schwenkbar sind. Dieses gelingt durch Steuerschienen 26, die im Ausführungsbeispiel kurvenförmig ausgebildet sind, wobei die Schwenkrahmen 23 bzw. die eingesetzten Transferkörbe 12 im Zuge des Verschiebens derart in den Steuerschienen 26 geführt sind, dass die Transferkörbe 12 selbsttätig verschwenken, denn die Transferkörbe 12 weisen im Ausführungsbeispiel unterseitige Steuerzapfen 27 auf, welche in die Steuerschienen 26 eingreifen. Dabei weist der Tragrahmen 25 zwei Führungsschienen 28 auf, in denen der Verschieberahmen 24 horizontal linear geführt ist, und zwar über einen Antrieb 29.

In ähnlicher Weise ist die untere Umladeeinrichtung 22 ausgestaltet, die ebenfalls einen Tragrahmen 25, einen Verschieberahmen 24 und zwei Schwenkrahmen 23 aufweist. Bevorzugt sind drei Transferkörbe vorgesehen.

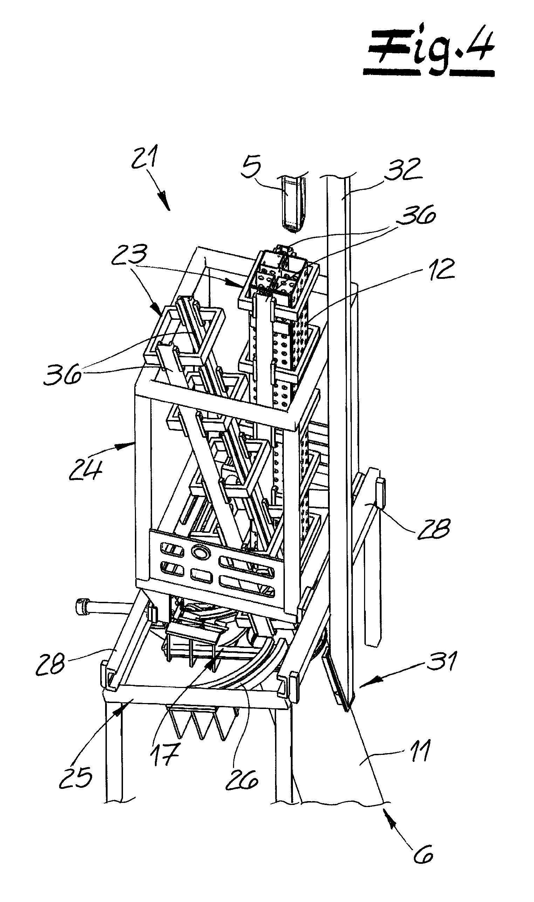

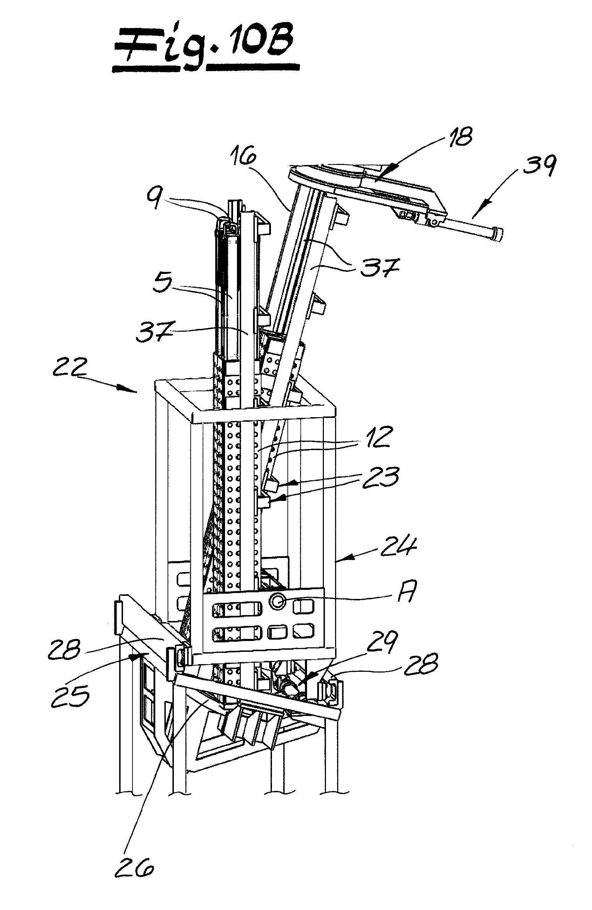

Die Funktionsweise der erfindungsgemäßen Transfervorrichtung 6 soll nun anhand der Fig. 4 bis 10a, 10b. erläutert werden. Zunächst werden die Brennelemente 5 aus dem Reaktorbehälter mit Hilfe der Lademaschine 7 entnommen und in den Bereich der oberen Umladeeinrichtung 21 transportiert. Dort befindet sich innerhalb eines Schwenkrahmens 23 ein Transferkorb 12 in der vertikalen Umladeposition, so dass vier Brennelemente in den Transferkorb 12 eingesetzt werden können (vgl. Fig. 4). Dieser Transferkorb 12 befindet sich in der vertikalen Umladeposition seitlich versetzt neben dem Transferrohr 11. Über dem Transferrohr 11 befindet sich z. B. ein leerer Transferkorb 12 in der schrägen Transferposition, wobei dieser leere Transferkorb 12 beispielsweise während des Beladens des anderen Transferkorbes aus dem Bereich der unteren Umladeeinrichtung 22 nach oben transportiert wurde.

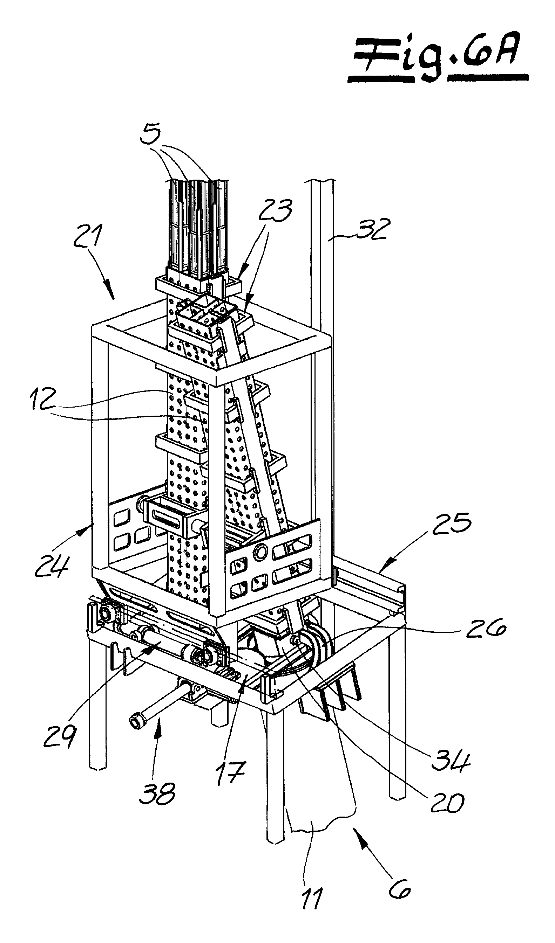

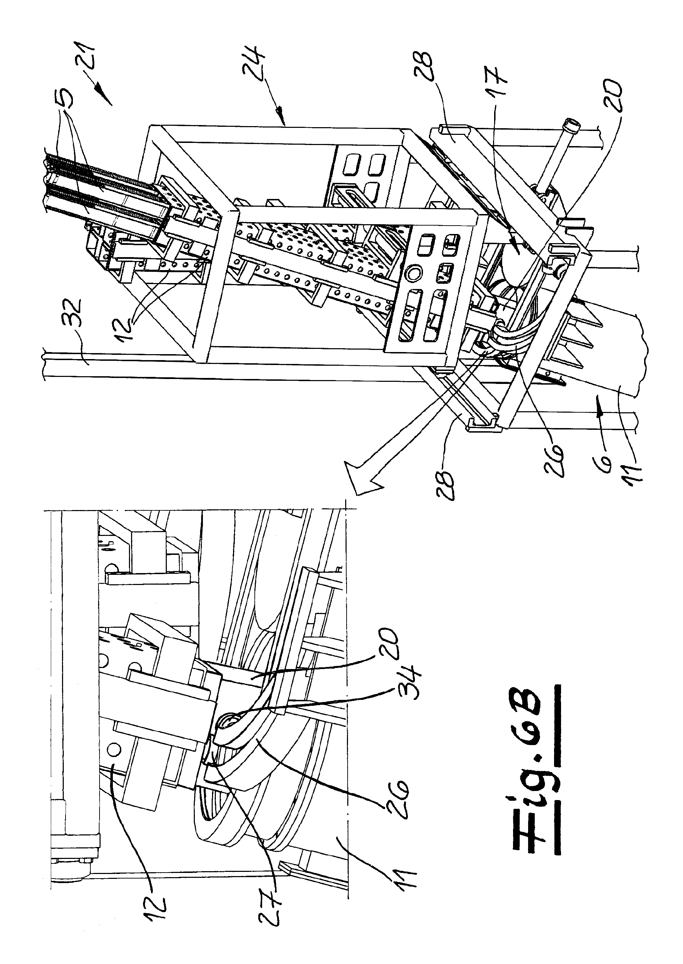

Um nun den befüllten Transferkorb 12 über dem Transferrohr 11 zu positionieren, wird der Verschieberahmen 24 mit den darin angeordneten Schwenkrahmen 23 verschoben. Dieses ergibt sich aus einer vergleichenden Betrachtung der Fig. 6a und 6b, welche die obere Umladeeinrichtung 21 in unterschiedlichen Funktionsstellungen und in unterschiedlichen Ansichten zeigen. Die Transferkörbe 12 greifen mit ihren unteren Steuerzapfen 27 in die Steuerschienen 26, so dass im Zuge des Verschiebens des Verschieberahmens 24 und damit auch der Schwenkrahmen 23 diese Schwenkrahmen 23 mit den darin eingesetzten Transferkörben 12 gegenläufig schwenken, so dass der befüllte Transferkorb 12 nicht nur über dem Transferrohr 11 positioniert, sondern zugleich auch aus der vertikalen Umladeposition in die schräge Transferposition geschwenkt wird.

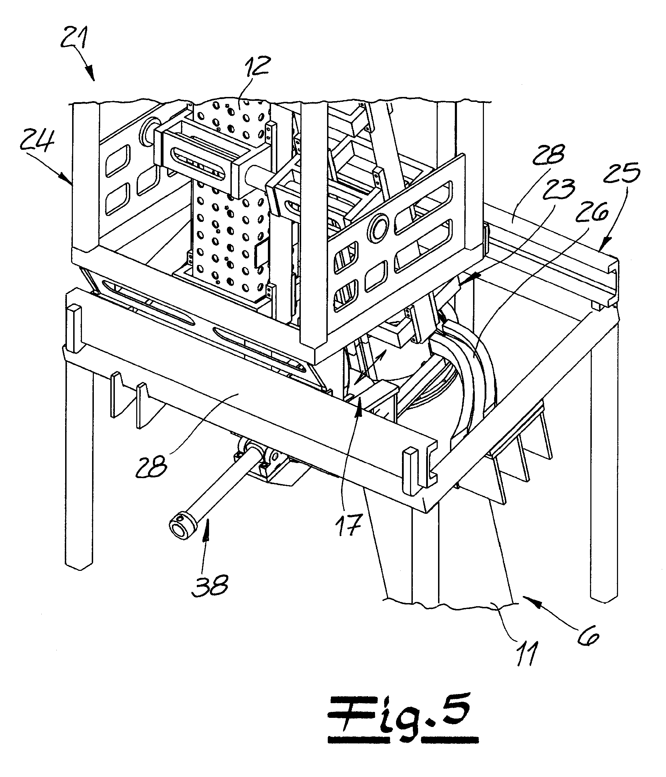

Der Hubwagen 20, mit dem zuvor ein leerer Transferkorb 12 von unten nach oben transportiert wurde, befindet sich folglich nach wie vor im Bereich des oberen Endes des Transferrohres 11, so dass der befüllte Transferkorb 12 im Zuge des Verschiebens des Verschieberahmens 24 auf den Hubwagen 20 aufgesetzt wird. Das obere Absperrelement 17 ist dabei geöffnet (vgl. Fig. 5).

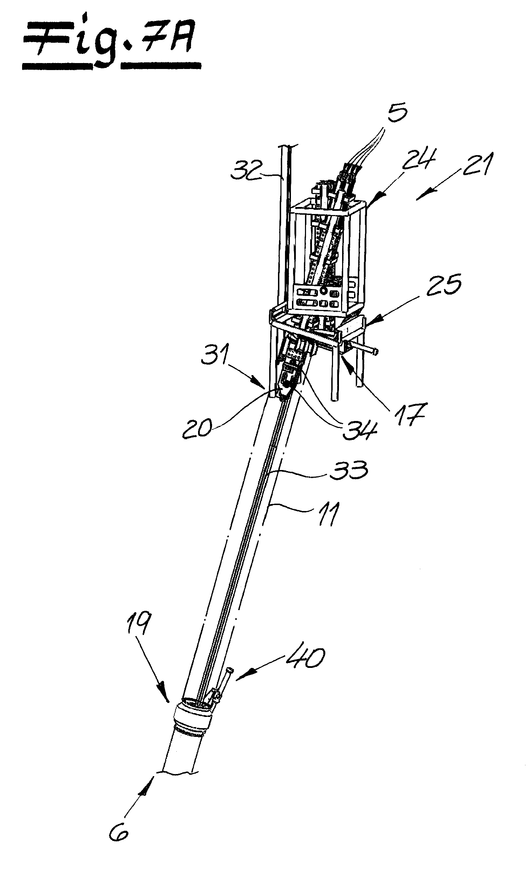

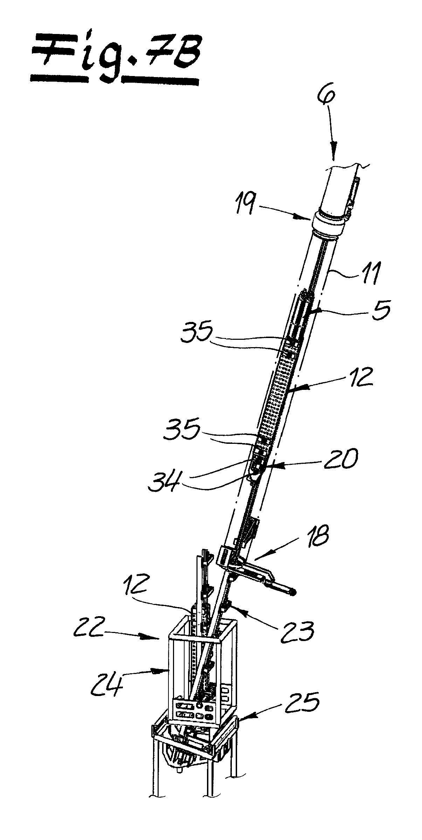

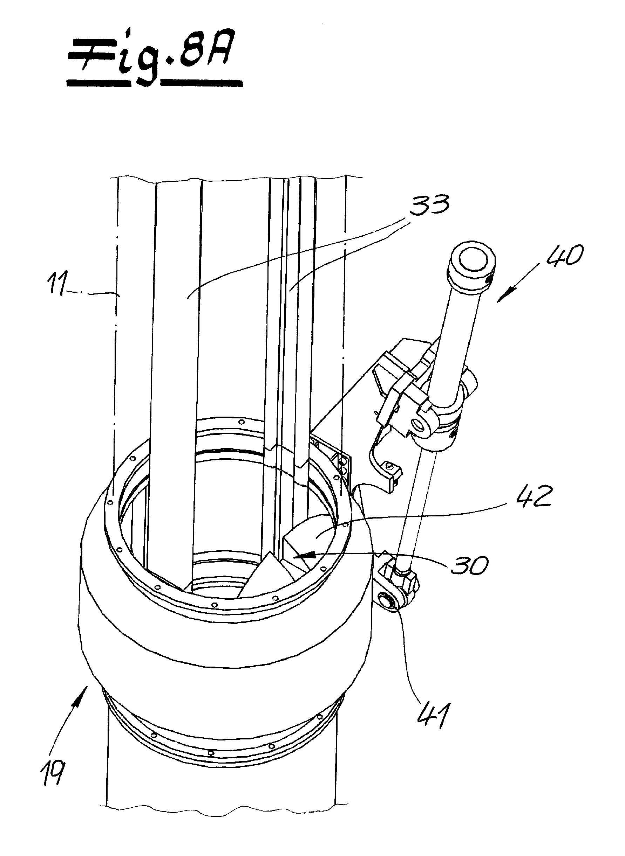

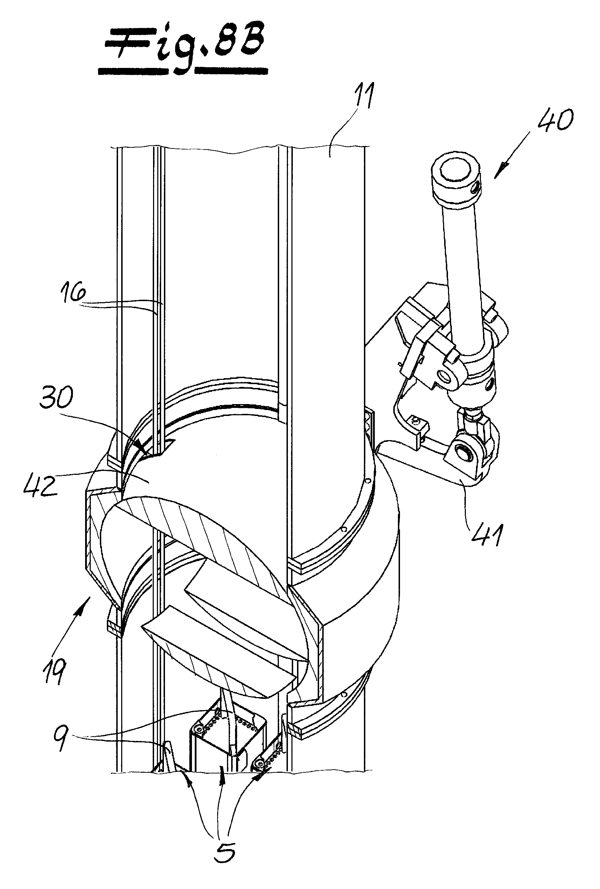

Nun kann der Hubwagen 20 mit dem darauf aufgesetzten befüllten Transferkorb 12 mit Hilfe der Seilzugvorrichtung 13 abgesenkt werden (vgl. Fig. 7a, 7b). Das untere Absperrorgan 18 ist zunächst geschlossen. Gleiches gilt für die Zwischenventile (Kugelventile 19) im Inneren des Transferrohres 11. Im Zuge des Absenkens des Hubwagens 20 mit dem Transferkorb 12 werden dann die Zwischenventile 19 einzeln nach und nach schleusenartig geöffnet und nach Durchfahren des Hubwagens mit Transferkorb 12 sofort wieder geschlossen. Dieses ist möglich, weil die Zwischenventile 19 jeweils einen Seildurchlass 30 aufweisen, durch welchen das Zugseil 16 in der Schließstellung dieses Ventils hindurchführbar ist. Auf diese Weise wird das Ablaufen von Flüssigkeit aus dem oberen Becken 3 in das untere Becken 4 während des Transfers verhindert (vgl. Fig. 8a, 8b).

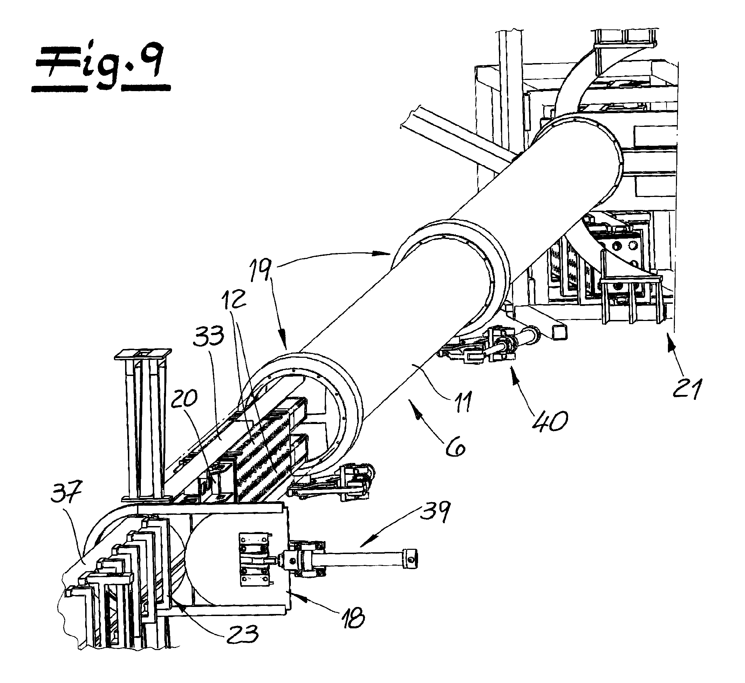

Bevor der Transferkorb 12 unterseitig aus dem Transferrohr 11 austreten kann, wird der untere Schieber 18 geöffnet. Dazu wird auf Fig. 9 verwiesen, welche das Transferrohr 11 in einer Ansicht schräg von unten zeigt. Es ist erkennbar, dass der Transferkorb 12 unterhalb des unteren Zwischenventils 19 abgesenkt wird, wobei dieses Zwischenventil 19 geschlossen ist. Der untere Schieber 18 wird geöffnet.

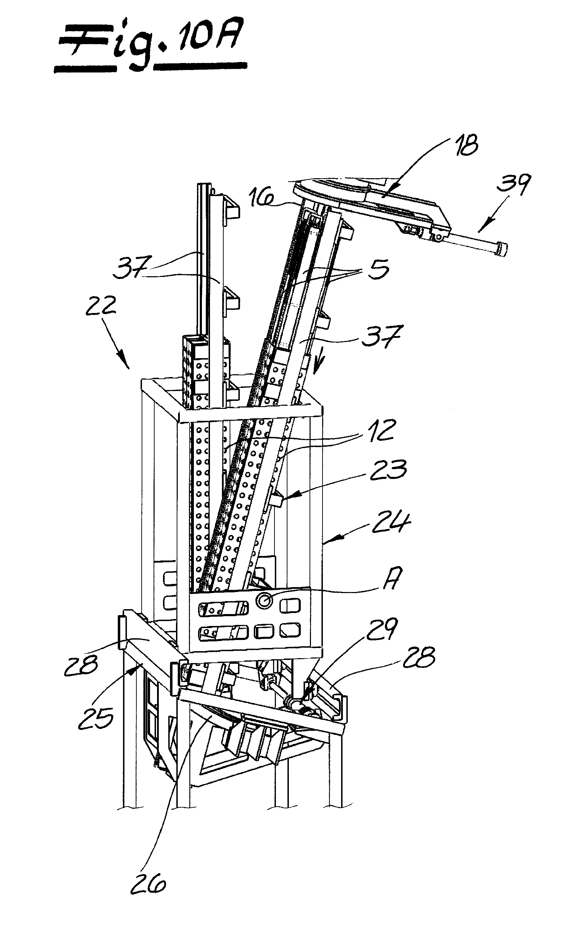

Der Hubwagen 20 mit dem darauf aufgesetzten Transferkorb 12 tritt dann unterseitig aus dem Transferrohr 11 aus und folglich in die untere Umladeeinrichtung 22 ein. Dazu wird auf eine vergleichende Betrachtung der Fig. 10a, 10b verwiesen.

In der unteren Umladeeinrichtung 22 befindet sich folglich der befüllte Transferkorb 12 in der schrägen Transferposition und außerdem ist wiederum ein leerer Transferkorb 12 in der vertikalen Umladeposition vorgesehen. Der Verschieberahmen 24 kann wieder verschoben werden, so dass die Transferkörbe entsprechend positioniert und geschwenkt werden. Der befüllte Transferkorb 12 gelangt folglich in die vertikale Umladeposition, während der leere Transferkorb 12 unterhalb des Transferrohres 11 in die schräge Transferposition gelangt. Nun kann der leere Transferkorb 12 wiederum mit dem Hubwagen 20 nach oben transportiert werden. In der gleichen Zeit kann der befüllte Transferkorb 12 mit der unteren Transportvorrichtung 10 entladen werden.

Damit wird deutlich, dass ein schneller Transfer der Brennelemente realisiert werden kann. Insbesondere kann zeitgleich in der oberen Umladeeinrichtung beladen und in der unteren Umladeeinrichtung entladen werden. Insbesondere kann während des Beladens und Entladens ein Transport eines weiteren Transferkorbes 12 durch die Transfervorrichtung realisiert werden. Bevorzugt werden folglich zumindest zwei Transferkörbe vorgesehen. Im Ausführungsbeispiel sind jedoch drei Transferkörbe vorgesehen, wobei sich stets ein Transferkorb in der oberen Umladeeinrichtung und ein Transferkorb in der unteren Umladeeinrichtung befindet, während ein dritter Transferkorb zwischen der oberen Umladeeinrichtung und der unteren Umladeeinrichtung transportiert werden kann.

In Fig. 2 ist außerdem erkennbar, dass das Zugseil 16 der Seilzugvorrichtung 13 nicht über das obere Stirnende des Transferrohres 11 in das Transferrohr eingeführt ist, sondern dass das Transferrohr 11 unterhalb des oberen Schiebers 17 einen (seitlichen) Seileinlass 31 aufweist, durch den das Zugseil 16 aus dem Rohrinnern zu der Seilwinde 14 hindurchgeführt ist, und zwar durch ein Seilführungsrohr 32. Dieser Seileinlass 31 ist folglich unterhalb des Schiebers 17 und insbesondere unterhalb der oberen Umladeeinrichtung 21 angeordnet. Ein solcher Seileinlass ist insbesondere in Verbindung mit dem beschriebenen Hubwagen 20 zweckmäßig, der unterhalb der Transferkörbe 12 angeordnet ist.

In den Figuren sind im Übrigen die Führungsschienen 33 innerhalb des Transferrohres 11 erkennbar. Der Hubwagen 20 ist mit Führungselementen, nämlich Rollen 34 ausgerüstet, die in diesen Führungsschienen 33 geführt sind. Auch die Transferkörbe sind mit Führungselementen 35 in Form von Rollen ausgerüstet, die ebenfalls in den Führungsschienen 33 geführt sind. Außerdem sind im Bereich der oberen Umladeeinrichtung 21 ebenfalls Führungsschienen 36 und im Bereich der unteren Umladeeinrichtung Führungsschienen 37 vorgesehen.

Die obere Umladeeinrichtung 21 und die untere Umladeeinrichtung 22 sind im Ausführungsbeispiel funktionell gleichwertig ausgebildet. Sie unterscheiden sich in ihrer Konstruktion in bestimmten Details. Dieses betrifft z. B. die Schwenkrahmen 23. Es ist erkennbar, dass die Schwenkrahmen 23 der oberen Umladeeinrichtung vollumfänglich geschlossen sind, während die Schwenkrahmen 23 der unteren Umladeeinrichtung einseitig offen sind. Dieses hängt damit zusammen, dass das Zugseil 16 in der unteren Umladeeinrichtung 22 an den Schwenkrahmen 23 vorbeigeführt werden muss, so dass ein Verschwenken der Schwenkrahmen 23 durch das Zugseil nicht behindert werden darf.

Schließlich ist in den Figuren ebenfalls angedeutet, dass die Absperrelemente 17, 18, 19 pneumatisch angetrieben sind. Dazu ist der obere Schieber 17 mit einem pneumatischen Antrieb 38 versehen. Der untere Schieber 18 ist mit einem pneumatischen Antrieb 39 versehen. Die Kugelventile 19 sind ebenfalls mit pneumatischen Antrieben 40 versehen, welche als Linearantriebe ausgebildet sind und über einen Schwenkhebel 41 auf die Ventilkugel 42 des Ventils 19 arbeiten, wobei diese Ventilkugel 42 den beschriebenen Seildurchlass 30 aufweist, der als Durchbrechung der Ventilkugel 42 ausgebildet ist.

In den dargestellten Ausführungsbeispielen kommen pneumatische Antriebe zum Einsatz. Alternativ können auch elektrische oder hydraulische Antriebe verwendet werden.

## Patentansprüche

1. Transfervorrichtung (6) für den Transfer von Brennelementen (5) zwischen einem oberen Becken (3) und einem unteren Becken (4) einer kerntechnischen Anlage, insbesondere einem oberen Becken innerhalb eines Reaktorgebäudes (1) und einem unteren Becken eines Brennelementelagers (2), mit
- einem das obere und das untere Becken (3, 4) verbindenden und schräg zur Vertikalen verlaufenden Transferrohr (11),
- einem oder mehreren Transferkörben (12), in welche jeweils ein oder mehrere Brennelemente (5) für den Transfer durch das Transferrohr (12) einsetzbar sind,
- einer oberen Umladeeinrichtung (21) im oberen Becken (3) zum Beladen und/oder Entladen der Transferkörbe (12) mit Brennelementen (5) und/oder
- einer unteren Umladeeinrichtung (22) im unteren Becken zum Beladen und/oder Entladen der Transferkörbe (12) mit Brennelementen (5),
wobei in die obere Umladeeinrichtung (21) und/oder die untere Umladeeinrichtung (22) jeweils zwei Transferkörbe (12) einsetzbar sind, welche zur Positionierung über bzw. unter dem Transferrohr (11) verschiebbar und im Zuge des Verschiebens vorzugsweise selbsttätig aus einer vertikalen Umladeposition in eine schräge Transferposition und umgekehrt schwenkbar sind,
**dadurch gekennzeichnet, dass**
die obere Umladeeinrichtung (21) und/oder die untere Umladeeinrichtung (22) jeweils zwei Schwenkrahmen (23) aufweist/aufweisen, in welche jeweils ein Transferkorb (12) einsetzbar ist und in welchen die Transferkörbe (12) aus einer vertikalen Umladeposition in eine schräge Transferposition und umgekehrt schwenkbar sind.

2. Vorrichtung nach Anspruch 1, **dadurch gekennzeichnet, dass** die Schwenkrahmen (mit darin angeordneten Transferkörben) um eine gemeinsame (horizontale) Achse (A) schwenkbar montiert sind.

3. Vorrichtung nach Anspruch 1 oder 2, wobei die Schwenkrahmen (23) gemeinsam horizontal verschiebbar und (z. B. über die eingesetzten Transferkörbe) im Zuge des Verschiebens selbsttätig schwenkbar sind.

4. Vorrichtung nach Anspruch 3, **dadurch gekennzeichnet, dass** die Schwenkrahmen (23) oder die darin eingesetzten Transferkörbe (12) im Zuge des Verschiebens derart in/an Steuerschienen (26) geführt sind, dass die Transferkörbe selbsttätig schwenken, vorzugsweise indem unterseitige Steuerzapfen (27) in den Steuerschienen (26) geführt sind.

5. Vorrichtung nach Anspruch 4, **dadurch gekennzeichnet, dass** die Steuerschienen (26) als kurvenförmige Schienen ausgebildet sind.

6. Vorrichtung nach einem der Ansprüche 1 bis 5, **dadurch gekennzeichnet, dass** die Schwenkrahmen (23) in einem gemeinsamen Verschieberahmen (24) schwenkbar angeordnet und mit diesem verschiebbar sind, wobei die Schwenkrahmen (23) mit den eingesetzten Transferkörben (12) durch Verschieben des Verschieberahmens relativ zu dem Transferrohr (11) positionierbar und dabei selbsttätig schwenkbar sind.

7. Vorrichtung nach Anspruch 6, **dadurch gekennzeichnet, dass** der Verschieberahmen (24) in einem Tragrahmen (25) verschiebbar geführt ist, wobei an den Tragrahmen (25) ein oder mehrere Steuerschienen (26) angeschlossen sind.

8. Vorrichtung nach einem der Ansprüche 1 bis 7, **dadurch gekennzeichnet, dass** der Flüssigkeitsspiegel des oberen Beckens (3) oberhalb des Flüssigkeitsspiegels des unteren Beckens (4) liegt.

9. Vorrichtung nach einem der Ansprüche 1 bis 8, **gekennzeichnet durch** eine Seilzugeinrichtung (13) mit einem innerhalb des Transferrohres (11) geführten Zugseil (16) zum Anheben und Absenken der Transferkörbe (12) innerhalb des Transferrohres (11).

10. Vorrichtung nach Anspruch 9, **gekennzeichnet durch** einen innerhalb des Transferrohres (11) geführten Hubwagen (20), an welchen das Zugseil (16) angeschlossen ist und auf welchen ein Transferkorb (12) für den Transfer aufsetzbar ist.

11. Vorrichtung nach einem der Ansprüche 1 bis 10, **dadurch gekennzeichnet, dass** das Transferrohr (11) an seinem oberen Ende mit einem Absperrelement (17) und unterhalb des oberen Absperrelementes (17) mit einem Seileinlass (31) versehen ist, durch den das Zugseil (16) aus dem Rohrinnern zu einer Seilwinde der Seilzugeinrichtung hindurchgeführt ist.

12. Vorrichtung nach einem der Ansprüche 1 bis 11, **dadurch gekennzeichnet, dass** in/an dem Transferrohr (12) zumindest ein Absperrelement (19) vorgesehen ist, welches als teilschließendes Absperrelement mit einem Seildurchlass (30) versehen ist, durch welchen das Zugseil (16) in Schließstellung hindurchführbar ist.

## Claims

1. A transfer device (6) for the transfer of fuel elements (5) between an upper pool (3) and a lower pool (4) of a nuclear plant, in particular an upper pool inside a reactor building (1) and a lower pool of a fuel element store (2), with
- a transfer pipe (11) connecting the upper and lower pools (3, 4) and running at an inclination to the vertical,
- one or a plurality of transfer cages (12) into which in each case one or a plurality of fuel elements (5) can be inserted for the transfer through the transfer pipe (11),
- an upper transhipment device (21) in the upper pool (3) for purposes of loading and/or unloading the transfer cages (12) with fuel elements (5), and/or
- a lower transhipment device (22) in the lower pool for purposes of loading and/or unloading the transfer cages (12) with fuel elements (5), wherein
in each case two transfer cages (12) can be inserted into the upper transhipment device (21) and/or the lower transhipment device (22), which for purposes of positioning over or under the transfer pipe (11) can be moved and in the course of movement, can be swivelled, preferably automatically, out of a vertical transhipment position into an inclined transfer position, and vice versa,
**characterised in that**,
the upper transhipment device (21) and/or the lower transhipment device (22) in each case have two swivelling frames (23), into which one transfer cage (12) can be inserted in each case, and in which the transfer cages (12) can be swivelled out of a vertical transhipment position into an inclined transfer position, and vice versa.

2. The device according to claim 1, **characterised in that** the swivelling frames (with transfer cages therein arranged) are mounted such that they can be swivelled about a common (horizontal) axis (A).

3. The device according to claim 1 or 2, wherein the swivelling frames (23) can together be moved horizontally, and (e.g. by means of the inserted transfer cages) can be automatically swivelled in the course of movement.

4. The device according to claim 3, **characterised in that** in the course of movement the swivelling frames (23) or the transfer cages (12) therein inserted are guided in/on control rails (26), which automatically swivel the transfer cages, preferably **in that** control pins (27) located on the underside are guided in the control rails (26).

5. The device according to claim 4, **characterised in that** the control rails (26) are designed as curved rails.

6. The device according to any one of the claims 1 to 5, **characterised in that** the swivelling frames (23) are arranged such that they can swivel in a common movement frame (24), and can be moved with the latter, wherein the swivelling frames (23), together with the inserted transfer cages (12), can be positioned relative to the transfer pipe (11) by movement of the movement frame and can thereby be automatically swivelled.

7. The device according to claim 6, **characterised in that** the movement frame (24) is guided such that it can be moved in a support frame (25), wherein one or a plurality of control rails (26) is connected to the support frame (25).

8. The device according to any one of the claims 1 to 7, **characterised in that** the fluid level of the upper pool (3) lies above the fluid level of the lower pool (4).

9. The device according to any one of the claims 1 to 8, **characterised by** a cable-pulling device (13) with a pull cable (16) guided within the transfer pipe (11) for purposes of raising and lowering the transfer cages (12) within the transfer pipe (11).

10. The device according to claim 9, **characterised by** a lifting carriage (20) guided within the transfer pipe (11), to which the pull cable (16) is connected, and on which a transfer cage (12) can be positioned for the transfer.

11. The device according to any one of the claims 1 to 10, **characterised in that** at its upper end the transfer pipe (11) is provided with a blocking element (17), and beneath the upper blocking element (17) it is provided with a cable inlet (31), through which the pull cable (16) is guided out of the interior of the pipe to a cable winch of the cable-pulling device.

12. The device according to any one of the claims 1 to 11, **characterised in that** at least one blocking element (19) is provided in/on the transfer pipe (11), which blocking element is provided as a partially-closing blocking element with a cable passage (30), through which the pull cable (16) can be guided in the closed position.

## Revendications

1. Dispositif de transfert (6) pour le transfert d'éléments combustibles (5) entre un bassin supérieur (3) et un bassin inférieur (4) d'une installation nucléaire, en particulier un bassin supérieur à l'intérieur d'un bâtiment de réacteur (1) et un bassin inférieur d'une installation de stockage d'éléments combustibles (2), comprenant
- un tube de transfert (11) reliant les bassins supérieur et inférieur (3, 4) et oblique par rapport à la verticale,
- un ou plusieurs paniers de transfert (12) dans lesquels respectivement un ou plusieurs éléments combustibles (5) peu(ven)t être placé(s) pour le transfert à travers le tube de transfert (11),
- un dispositif de transvasement supérieur (21) dans le bassin supérieur (3) pour charger et/ou décharger les paniers de transfert (12) avec les éléments combustibles (5) et/ou
- un dispositif de transvasement inférieur (22) dans le bassin inférieur pour charger et/ou décharger les paniers de transfert (12) avec les éléments combustibles (5),
sachant que deux paniers de transfert (12) respectifs peuvent être placés dans le dispositif de transvasement supérieur (21) et/ou le dispositif de transvasement inférieur (22), lesquels peuvent être déplacés pour le positionnement au-dessus, respectivement au-dessous du tube de transfert (11) et dans la foulée du déplacement, peuvent être basculés de préférence automatiquement d'une position de transvasement verticale à une position de transfert oblique et inversement,
**caractérisé en ce que**
le dispositif de transvasement supérieur (21) et/ou le dispositif de transvasement inférieur (22), présente(nt) respectivement deux cadres pivotants (23) dans lesquels un panier de transfert (12) peut être inséré respectivement et dans lesquels les paniers de transfert (12) peuvent être basculés d'une position de transvasement verticale à une position de transfert oblique et inversement.

2. Dispositif selon la revendication 1, **caractérisé en ce que** les cadres pivotants (avec les paniers de transfert disposés dedans) sont montés pivotants sur un axe (A) (horizontal) commun.

3. Dispositif selon la revendication 1 ou 2, dans lequel les cadres pivotants (23) peuvent être déplacés ensemble horizontalement et (par ex. par les paniers de transfert insérés) peuvent être basculés automatiquement dans la foulée du déplacement.

4. Dispositif selon la revendication 3, dans lequel les cadres pivotants (23) ou les paniers de transfert (12) insérés dedans peuvent être dirigés sur des rails de commande (26) dans la foulée du déplacement de telle façon que les paniers de transfert basculent automatiquement, de préférence en ce que des pivots de commande (27) en sous-face sont dirigés dans les rails de commande (26).

5. Dispositif selon la revendication 4, **caractérisé en ce que** les rails de commande (26) sont formés en tant que rails incurvés.

6. Dispositif selon l'une des revendications 1 à 5, **caractérisé en ce que** les cadres pivotants (23) sont disposés pivotants dans un cadre mobile commun (24) et peuvent être déplacés avec celui-ci, sachant que les cadres pivotants (23) avec les paniers de transfert (12) insérés, peuvent être positionnés par déplacement du cadre mobile par rapport au tube de transfert (11) et peuvent ainsi basculer automatiquement.

7. Dispositif selon la revendication 6, **caractérisé en ce que** le cadre mobile (24) est dirigé en étant mobile dans un cadre porteur (25), sachant qu'un ou plusieurs rails de commande (26) sont raccordés sur le cadre porteur (25).

8. Dispositif selon l'une des revendications 1 à 7, **caractérisé en ce que** le niveau de liquide du premier bassin (3) est supérieur au niveau de liquide du bassin inférieur (4).

9. Dispositif selon l'une des revendications 1 à 8, **caractérisé par** un dispositif à traction par câble (13) comprenant un câble de traction (16) dirigé à l'intérieur du tube de transfert (11) pour soulever et abaisser les paniers de transfert (12) à l'intérieur du tube de transfert (11).

10. Dispositif selon la revendication 9, **caractérisé par** un chariot de levage (20) dirigé à l'intérieur du tube de transfert (11) sur lequel est raccordé le câble de traction (16) et sur lequel un panier de transfert (12) peut être placé pour le transfert.

11. Dispositif selon l'une des revendications 1 à 10 **caractérisé en ce que** le tube de transfert (11) est doté d'un élément d'arrêt (17) sur son extrémité supérieure et d'une entrée de câble (31) en-dessous de son élément d'arrêt (17) supérieur, à travers lequel le câble de traction (16) est dirigé de l'intérieur du tube vers un treuil de manoeuvre du dispositif à câble de traction.

12. Dispositif selon l'une des revendications 1 à 11 **caractérisé en ce qu'**au moins un élément d'arrêt (19) est prévu dans/sur le tube de transfert (11), lequel est doté d'un passage de câble (30) en tant qu'élément d'arrêt à fermeture partielle, à travers lequel le câble de traction (16) peut être dirigé en position de fermeture.
